# EUROPÄISCHE PATENTANMELDUNG

(11) **EP 1 498 598 A1**
(43) Veröffentlichungstag der Anmeldung: **19.01.2005**
(21) Anmeldenummer: 04014789.4
(22) Anmeldetag: 24.06.2004
(51) Int. Cl.: F02F 7/00, F02B 77/13, F01M 11/00

(54) **Schallisolierendes Gehäuseteil aus Kunststoff für Brennkraftmaschinen oder Fahrzeuggetriebe**

(30) Priorität: 15.07.2003 DE 10332171
(71) Anmelder: Carcoustics Tech Center GmbH, 51381 Leverkusen (DE)
(72) Erfinder: Abeck, Volkmar, 50825 Köln (DE)
(74) Vertreter: COHAUSZ & FLORACK

(57) **Zusammenfassung**

Die Erfindung betrifft ein schallisolierendes Gehäuseteil aus Kunststoff für Brennkraftmaschinen oder Fahrzeuggetriebe, mit einem schalenförmigen Abschnitt (1) und einem daran einstückig angeformten Befestigungsabschnitt (2). Um die schallisolierende Wirkung des Gehäuseteils zu verbessern, wobei die Festigkeit des Gehäuseteils nicht vermindert, sondern eher erhöht, andererseits aber das Gewicht des Gehäuseteils nicht erhöht, sondern eher verringert werden soll, ist erfindungsgemäß vorgesehen, dass der schalenförmige Abschnitt (1) durch Thermoplast-Schaum-Gießen hergestellt wird, derart, dass er im Querschnitt betrachtet einen mittleren, zelligen Wandabschnitt (4) aufweist, der zur Innenseite in einen im Wesentlichen zellfreien Innenwandabschnitt (5) und zur Außenseite in einen im Wesentlichen zellfreien Außenwandabschnitt (6) übergeht. Nach einer bevorzugten Ausgestaltung der Erfindung kann an der Außenseite des schalenförmigen Abschnitts (1) eine Elastomerschicht angeordnet sein. Das Gehäuseteil kann beispielsweise als Ölwanne oder Getriebedeckel ausgebildet sein.

## Beschreibung

Die Erfindung betrifft ein schallisolierendes Gehäuseteil aus Kunststoff für Brennkraftmaschinen oder Fahrzeuggetriebe, mit einem schalenförmigen Abschnitt und einem daran einstückig angeformten Befestigungsabschnitt.

Aus der DE 199 14 607 C2 ist eine aus Kunststoff gefertigte Ölwanne für Fahrzeugmotoren und -getriebe bekannt, die zusätzlich zu an der Außenseite des Wannenbodens ausgebildeten Rippen Stege zur Verbesserung der mechanischen Belastbarkeit gegenüber durch Steinschlag hervorgerufenen Außenbelastungen aufweist, wobei die Stege mindestens soweit wie die Rippen vorstehen und eine höhere Steifigkeit als die Rippen aufweisen. Die Stege und Rippen sind in Fahrtrichtung des Fahrzeugs ausgerichtet, wobei die Stege im Bereich der Seitenwand der Ölwanne angeordnet sind und eine gemeinsame Standfläche bilden. Bei einer Ausführungsform ist die Ölwanne als einteiliges Spritzgußteil aus glasfaserverstärktem Polyamid ausgebildet. Bei einer alternativen Ausführungsform besteht die Ölwanne aus faserverstärktem Polypropylen, wobei der Wannenboden auf seiner Unterseite zwischen den nach unten vorstehenden Stegen eine Beschichtung aus thermoplastischem Elastomer trägt. Die Stege dienen der Aufnahme von statischen Kräften, die bei der Montage durch das Gewicht des aufliegenden Motors oder Getriebes entstehen, während die Rippen bzw. die Beschichtung aus thermoplastischem Elastomer die Ölwanne vor Steinschlag schützen sollen. Im Übrigen ist in der DE 199 14 607 C2 angegeben, dass die Steifigkeit der Ölwanne nicht zu groß sein sollte, um einer störenden Geräuschentwicklung vorzubeugen.

In der DE 198 18 592 C2 ist eine Brennkraftmaschine beschrieben, deren Nockenwelle durch eine Steuerkette angetrieben wird, wobei die Steuerkette zur Verringerung der Schallabstrahlung vollständig von einem kastenartigen Gehäuse aus Kunststoff umschlossen ist.

Der vorliegenden Erfindung liegt die Aufgabe zugrunde, ein Gehäuseteil der eingangs genannten Art hinsichtlich seiner schallisolierenden Wirkung zu verbessern, wobei die Festigkeit des Gehäuseteils nicht vermindert, sondern eher erhöht, andererseits aber das Gewicht des Gehäuseteils nicht erhöht, sondern eher verringert werden soll.

Diese Aufgabe wird bei einem gattungsgemäßen Gehäuseteil durch die im Kennzeichen des Anspruchs 1 angegebenen Merkmale gelöst.

Das erfindungsgemäße Gehäuseteil ist dadurch gekennzeichnet, dass sein schalenförmiger Abschnitt durch Thermoplast-Schaum-Gießen hergestellt ist und im Querschnitt betrachtet einen mittleren, zelligen Wandabschnitt aufweist, der zur Innenseite in einen im Wesentlichen zellfreien Innenwandabschnitt und zur Außenseite in einen im Wesentlichen zellfreien Außenwandabschnitt übergeht. Die kompakten, im Wesentlichen zellfreien Wandabschnitte stellen die Dichtheit des Gehäuseteils in Bezug auf Flüssigkeiten sicher, so dass das Gehäuseteil insbesondere als Ölwanne ausgebildet werden kann. Der mittlere, zellige Wandabschnitt weist vorzugsweise eine geschlossenzellige Struktur auf, so dass auch er flüssigkeitsdicht ist.

Der mittlere, geschäumte und somit zellige Wandabschnitt des schalenförmigen Abschnitts verleiht dem Gehäuseteil bei gleichem oder in bestimmten Grenzen sogar verringertem Gewicht eine höhere Steifigkeit und damit höhere Festigkeit als dies bei kompaktem Material der Fall ist. Zugleich bewirkt der mittlere, zellige Wandabschnitt eine verbesserte Schallisolierung, insbesondere Schalldämpfung. Gegenüber einem entsprechenden herkömmlichen Gehäuseteil aus Kunststoff weist das erfindungsgemäße Gehäuseteil in der Regel eine etwas größere Wanddicke auf. Das Gewicht des erfindungsgemäßen Gehäuseteils ist jedoch in der Regel nicht höher, sondern eher geringer als bei einem entsprechenden herkömmlichen Gehäuseteil.

Der schalenförmige Abschnitt des erfindungsgemäßen Gehäuseteil wird im Thermoplast-Schaumgussverfahren (TSG-Verfahren), insbesondere im Thermoplast-Schaum-Spritzgussverfahren hergestellt. Als Kunststoff wird ein thermoplastischer Kunststoff verwendet, insbesondere Polyamid, das vorzugsweise mit Glasfasern verstärkt ist. Dem thermoplastischen Kunststoff bzw. Polyamid wird für die Schaumbildung ein geeignetes Treibmittel zugegeben. Bei dem Treibmittel kann es sich beispielsweise um ein Treibmittel aus der Gruppe der Carbonate und basischen Carbonate von Zink, Eisen und Kupfer sowie deren Gemischen handeln. Zinkcarbonat wird als Treibmittel bevorzugt. Der verschäumbaren Kunststoffmasse können zudem Zusätze, wie Schaumstabilisatoren und Porenregler, zugegeben werden.

Eine bevorzugte Ausgestaltung des erfindungsgemäßen Gehäuseteils ist dadurch gekennzeichnet, dass der sich einstückig an den schalenförmigen Abschnitt anschließende Befestigungsabschnitt im Wesentlichen zellfrei ist. Der Befestigungsabschnitt kann insbesondere als umlaufender Flansch ausgebildet sein, der mehrere Befestigungsbohrungen zum Hindurchführen von Befestigungsschrauben aufweist. Durch die kompakte, im Wesentlichen zellfreie Ausgestaltung des Befestigungsabschnittes wird sichergestellt, dass es beim Anziehen von Befestigungsschrauben nicht zu einer die Planheit des Befestigungsabschnittes und damit dessen Dichtheit beeinträchtigenden Verformung kommt, was bei einer zelligen Ausgestaltung des Befestigungsabschnittes und einer relativ hohen Materialdicke eventuell der Fall sein könnte.

Eine andere vorteilhafte Ausgestaltung des erfindungsgemäßen Gehäuseteils besteht darin, dass an der Außenseite des schalenförmigen Abschnitts eine Elastomerschicht angeordnet ist. Die Elastomerschicht ist vorzugsweise aus thermoplastischem Elastomer gebildet, und zwar insbesondere aus solchem, der einen Polyamidanteil enthält. Die Elastomerschicht hat eine akustische Funktion, denn sie erhöht die schallisolierende Wirkung des erfindungsgemäßen Gehäuseteils. Die Elastomerschicht ist vorzugsweise nur partiell vorgesehen, und zwar an einem gegebenenfalls schwingfähigen bzw. schwingungsrelevanten Bereich des schalenförmigen Abschnitts des Gehäuseteils. Sie kann sowohl die Außenseite des Bodenbereichs als auch den umlaufenden Seitenbereich des schalenförmigen Abschnitts bedecken.

Der schalenförmige Abschnitt und die Elastomerschicht können stoffschlüssig und/oder formschlüssig miteinander verbunden sein. Sofern eine stoffschlüssige Verbindung gewünscht und der schalenförmige Abschnitt aus Polyamid gebildet ist, kann die Elastomerschicht vorteilhaft aus einem thermoplastischen Elastomer mit Polyamidanteil geformt, insbesondere spritzgegossen werden. Soll dagegen ein möglichst sortenreines Recycling erleichtert werden, so wird eine formschlüssige Verbindung von schalenförmigem Abschnitt und Elastomerschicht bevorzugt. Hierzu werden nach einer weiteren Ausgestaltung der Erfindung Hinterschnitte und/oder nietartige Verbindungselemente an dem schalenförmigen Abschnitt ausgebildet, an denen die Elastomerschicht formschlüssig befestigt und gegebenenfalls relativ einfach von dem schalenförmigen Abschnitt wieder abgelöst werden kann.

Eine weitere bevorzugte Ausgestaltung des erfindungsgemäßen Gehäuseteils besteht darin, dass der Kunststoff des schalenförmigen Abschnitts und/oder die Elastomerschicht einen die Wärmeleitfähigkeit erhöhenden Füllstoff enthält. Dieser Füllstoff kann vorzugsweise aus Magnetitteilchen bestehen.

In einer weiteren bevorzugten Ausgestaltung ist vorgesehen, dass an der Außenseite der Elastomerschicht eine Mehrzahl von Erhebungen und/oder Vertiefungen ausgebildet sind.

Weitere bevorzugte und vorteilhafte Ausgestaltungen der Erfindung sind in den Unteransprüchen und der nachfolgenden Beschreibung angegeben.

Nachstehend wird die Erfindung anhand einer mehrere Ausführungsbeispiele darstellenden Zeichnung näher erläutert. Es zeigen in schematischer Darstellung:
- Fig. 1: einen Teilschnitt durch ein Gehäuseteil gemäß einem ersten Ausführungsbeispiel der Erfindung;
- Fig. 2: einen Teilschnitt durch ein Gehäuseteil gemäß einem zweiten Ausführungsbeispiel der Erfindung;
- Fig. 3: einen Teilschnitt durch ein Gehäuseteil gemäß einem dritten Ausführungsbeispiel der Erfindung;
- Fig. 4: einen Teilschnitt durch ein Gehäuseteil gemäß einem vierten Ausführungsbeispiel der Erfindung;
- Fig. 5: einen Teilschnitt durch ein Gehäuseteil gemäß einem fünften Ausführungsbeispiel der Erfindung;
- Fig. 6: einen Teilschnitt durch ein Gehäuseteil gemäß einem sechsten Ausführungsbeispiel der Erfindung; und
- Fig. 7: einen Teilschnitt durch ein Gehäuseteil gemäß einem siebten Ausführungsbeispiel der Erfindung.

Bei den in der Zeichnung schematisch dargestellten Gehäuseteilen handelt es sich um aus Kunststoff hergestellte, schallisolierend wirkende Gehäuseteile für Brennkraftmaschinen oder Fahrzeuggetriebe, beispielsweise um Ölwannen, Getriebedeckel, Steuerkettenabdeckungen oder Zylinderkopfabdeckungen. Die Gehäuseteile weisen jeweils einen mulden- oder schalenförmigen Abschnitt 1 und einen daran einstückig angeformten Befestigungsabschnitt 2 auf.

Der Befestigungsabschnitt ist in den dargestellten Ausführungsbeispielen als umlaufender Flansch ausgebildet, in dem mehrere Bohrungen 3 bzw. Ausnehmungen zum Hindurchführen von Befestigungsschrauben (nicht gezeigt) ausgebildet sind.

Der schalenförmige Abschnitt des Gehäuseteils ist durch Thermoplast-Schaum-Gießen (TSG) hergestellt. Unter Thermoplast-Schaum-Gießen wird hier insbesondere das Thermoplast-Schaum-Spritzgießen verstanden. Beim Thermoplast-Schaum-Gießen entstehen Integral-Strukturen, die durch eine kompakte Außenhaut und einen zelligen Kern gekennzeichnet sind. Dementsprechend,weist der schalenförmige Abschnitt 1 im Querschnitt betrachtet einen mittleren, zelligen Wandabschnitt 4 auf, der zur Innenseite in einen kompakten, im Wesentlichen zellfreien Innenwandabschnitt 5 und zur Außenseite in einen kompakten, im Wesentlichen zellfreien Außenwandabschnitt 6 übergeht. Die Wandabschnitte 4, 5 und 6 stellen also keine einzelnen Laminatschichten dar, sondern sind im Querschnitt erkennbare Wandabschnitte einer einstückigen bzw. einteiligen Gehäusewand. Die Wandabschnitte 5 und 6 sind die kompakte Haut der Integral-Struktur (Gehäusewand) und der mittlere Wandabschnitt 4 deren zelliger Kern.

Der schalenförmige Abschnitt 1 und der Befestigungsabschnitt 2 sind aus thermoplastischem Kunststoff, vorzugsweise aus glasfaserverstärktem Polyamid gebildet, dem ein geeignetes Treibmittel zur Erzeugung der Schaumstruktur im mittleren Wandabschnitt 4 beigemischt wird. Der thermoplastische Kunststoff enthält vorzugsweise einen seine Wärmeleitfähigkeit erhöhenden Füllstoff, bei dem es sich insbesondere um Magnetitteilchen handeln kann.

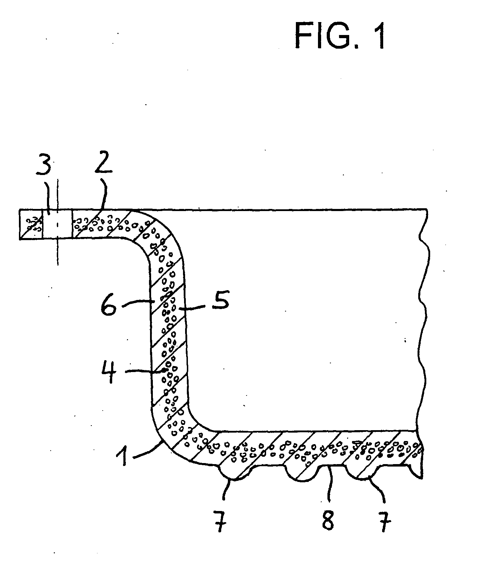

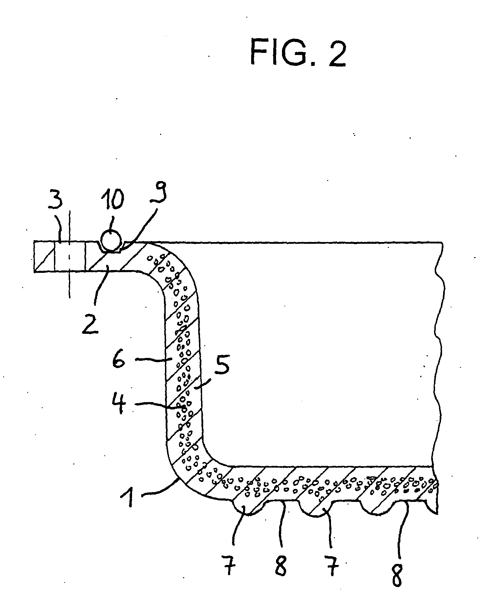

Bei den in den Figuren 1 und 2 dargestellten Ausführungsbeispielen sind an der Außenseite des schalenförmigen Abschnitts 1 mehrere rippenförmige Erhebungen 7 bzw. rillenartige Vertiefungen 8 ausgebildet. Die Erhebungen 7 und Vertiefungen 8 vergrößern die Oberfläche des schalenförmigen Abschnitts 1 und verbessern somit den Wärmeübergang vom Gehäuseteil zur Umgebung. Darüber hinaus verbessern die rippenartigen Erhebungen 7 die Festigkeit des Gehäuseteils.

Bei dem in Fig. 1 gezeigten Ausführungsbeispiel erstreckt sich der mittlere, zellige Wandabschnitt 4 sowohl über den schalenförmigen Abschnitt 1 als auch über den sich daran einstückig anschließenden Befestigungsabschnitt 2. Bei dem in Fig. 2 gezeigten Ausführungsbeispiel ist der flanschförmige Befestigungsabschnitt 2 dagegen im Querschnitt betrachtet im Wesentlichen zellfrei ausgebildet. Zudem weist der Befestigungsabschnitt 2 hier eine umlaufende Nut 9 auf, in der ein Dichtungsring 10 eingelegt ist.

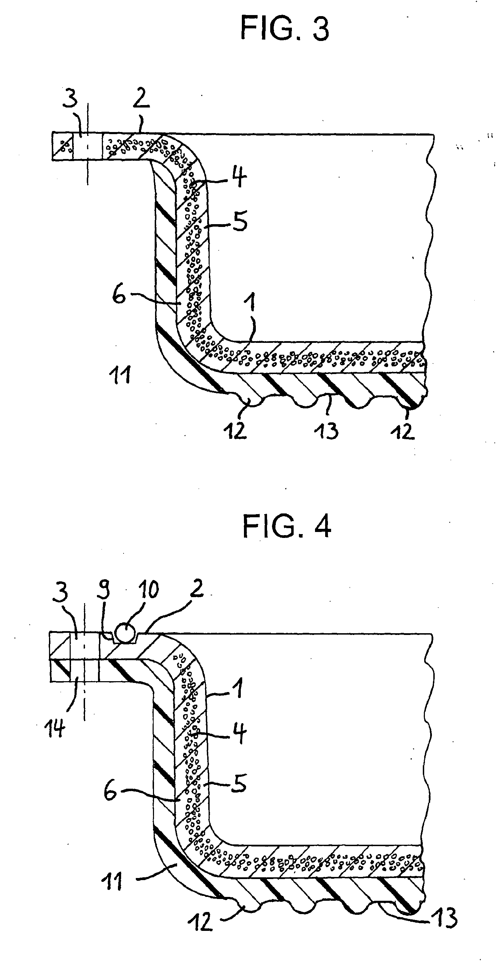

Bei den in den Figuren 3 bis 7 dargestellten Ausführungsbeispielen ist zur Verbesserung der schallisolierenden Wirkung des Gehäuseteils eine Elastomerschicht 11 an der Außenseite des schalenförmigen Abschnitts 1 angeordnet. Die Elastomerschicht 11 ist vorzugsweise aus thermoplastischem Elastomer gebildet. Sie kann auf verschiedene Weise mit dem schalenförmigen Abschnitt 1 verbunden sein.

Bei dem in Fig. 3 gezeigten Ausführungsbeispiel sind der schalenförmige Abschnitt 1 und die Elastomerschicht 11 stoffschlüssig miteinander verbunden. Der schalenförmige Abschnitt 1 und der Befestigungsabschnitt 2 können dabei wiederum vorzugsweise aus glasfaserverstärktem Polyamid im TSG-Verfahren gebildet sein. Bei aus Polyamid hergestelltem schalenförmigem Abschnitt 1 wird die Elastomerschicht 11 vorzugsweise aus Polyamid enthaltendem thermoplastischem Elastomer (Polyamid-TPE) gebildet, um eine ausreichend feste stoffschlüssige Verbindung zwischen dem schalenförmigen Abschnitt 1 und der Elastomerschicht 11 sicherzustellen. An der Außenseite der Elastomerschicht 11 können mehrere rippenförmige Erhebungen 12 bzw. rillenartige Vertiefungen 13 vorgesehen sein. Die Elastomerschicht 11 kann zudem einen ihre Wärmeleitfähigkeit erhöhenden Füllstoff enthalten, insbesondere Magnetitteilchen.

Das in Fig. 4 gezeigte Ausführungsbeispiel unterscheidet sich von dem Ausführungsbeispiel gemäß Fig. 3 zunächst dadurch, dass die Elastomerschicht 11 nicht auf den Bereich des schalenförmigen Abschnitts 1 des Gehäuseteils begrenzt ist, sondern bis in den Bereich des Befestigungsabschnitts 2 erweitert ist, wobei in der Elastomerschicht 11 ebenfalls Ausnehmungen 14 zum Hindurchführen von Befestigungsschrauben (nicht gezeigt) ausgebildet sind. Der mittlere, zellige Wandabschnitt 4 ist auf den schalenförmigen Abschnitt 1 begrenzt. In dem kompakten, im Wesentlichen zellfreien Befestigungsabschnitt 2 ist wiederum eine umlaufende Nut 9 ausgebildet, die einen gummielastischen Dichtungsring 10 aufnimmt. Die Verbindung zwischen der Elastomerschicht 11 und dem schalenförmigen Abschnitt 1 ist hier über die formschlüssige Verbindung im Bereich des Befestigungsabschnitts 2 mittels der Befestigungsschrauben realisiert. Bei diesem Ausführungsbeispiel kann somit auf eine stoffschlüssige Verbindung zwischen Elastomerschicht 11 und schalenförmigen Abschnitt 1 verzichtet werden, so dass sich diese Teile 1, 11 hinsichtlich eines sortenreinen Recyclings nach einer Demontage des Gehäuseteils einfach trennen lassen.

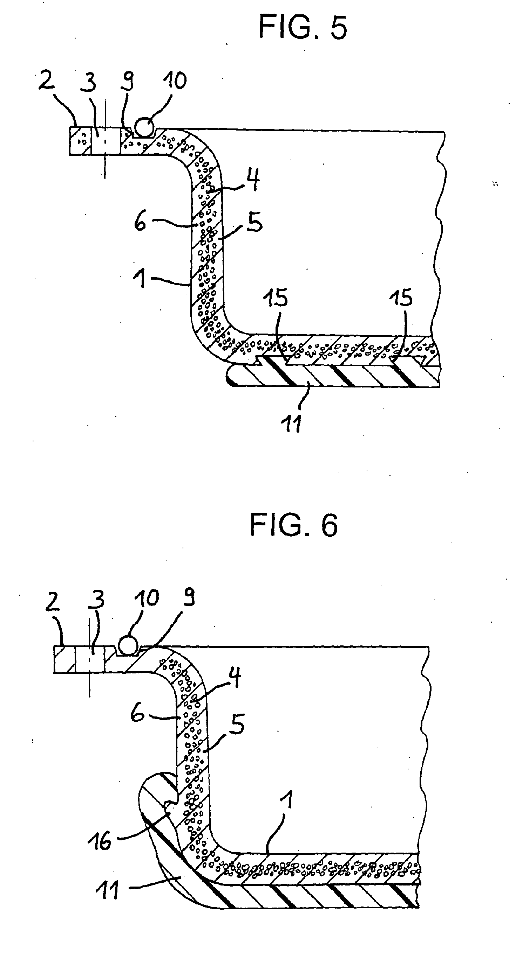

Eine weitere Möglichkeit der Verbindung von Elastomerschicht 11 und schalenförmigem Abschnitt 1 des Gehäuseteils ist in Fig. 5 veranschaulicht. Bei diesem Ausführungsbeispiel sind an der Außenseite des schalenförmigen Abschnitts 1 Hinterschneidungen 15 aufweisende Vertiefungen ausgebildet, in die das TPE-Material formschlüssig eingespritzt ist. Da hier somit nur eine partielle Verbindung an mehreren relativ kleinen Verbindungsstellen vorliegt, kann die Elastomerschicht 11 gegebenenfalls ohne Schwierigkeiten von dem schalenförmigen Abschnitt 1 abgetrennt werden, so dass ein sortenreines Recycling durchführbar ist. Alternativ kann die Verbindung von Elastomerschicht 11 und schalenförmigem Abschnitt 1 auch dadurch realisiert werden, dass an den Seiten des schalenförmigem Abschnitts 1 ein oder mehrere hinterschnittene Vorsprünge 16 ausgebildet werden, wie in Fig. 6 gezeigt. Die Elastomerschicht umgreift dann den jeweiligen Vorsprung 16, wobei sich ein ausreichend fester Formschluss ergibt, der ein ungewolltes Abfallen der Elastomerschicht sicher verhindert. Andererseits lässt dieser Formschluss eine relativ einfache Trennung von Elastomerschicht und schalenförmigem Abschnitt in Fällen zu, in denen dies gewollt ist.

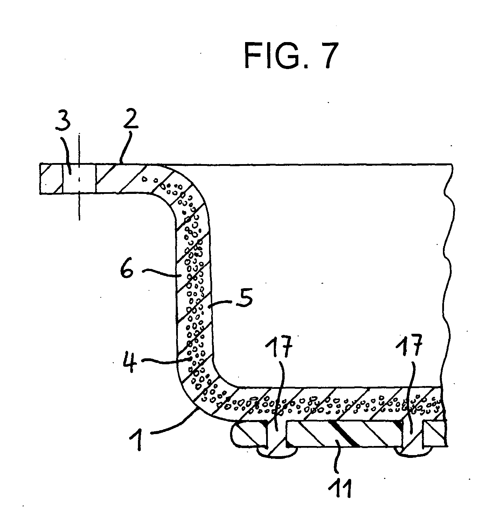

Eine weitere Möglichkeit der Verbindung von Elastomerschicht 11 und schalenförmigem Abschnitt 1 ist in Fig. 7 dargestellt. Dort sind an der Außenseite des schalenförmigen Abschnitts 1 stiftförmige Elemente 17 angeformt, deren Enden nach der Anbringung der Elastomerschicht 11 nietkopfförmig umgeformt bzw. verschmolzen werden. Die Elastomerschicht 11 kann in diesem Fall vorab separat mit entsprechenden Ausnehmungen für das Hindurchstecken der stiftförmigen Elemente 17 hergestellt werden. Elastomerschicht 11 und schalenförmiger Abschnitt werden auf diese Weise formschlüssig verbunden. Auch diese Art der Verbindung erlaubt gegebenenfalls eine relativ einfache Trennung von Elastomerschicht 11 und schalenförmigem Abschnitt 1, sofern dies für ein Recycling gewollt ist. Wie bei dem Ausführungsbeispiel gemäß Fig. 5 erstreckt sich die Elastomerschicht 11 hier im Wesentlichen nur über den Bodenbereich des schalenförmigen Abschnitts 1. Dieser Bereich neigt bei gattungsgemäßen Gehäuseteilen zum Schwingen, so dass eine auf diesen Bereich begrenzte Anordnung der Elastomerschicht 11 sinnvoll sein kann.

Die Erfindung ist in ihrer Ausführung nicht auf die vorstehend beschriebenen Ausführungsbeispiele beschränkt. Vielmehr sind eine Reihe von Varianten denkbar, die auch bei grundsätzlich abweichender Gestaltung von dem in den Ansprüchen wiedergegebenen Erfindungsgedanken Gebrauch machen. Insbesondere liegt es Rahmen der vorliegenden Erfindung, die in den Figuren dargestellten Merkmale miteinander zu kombinieren.

## Patentansprüche

1. Schallisolierendes Gehäuseteil aus Kunststoff für Brennkraftmaschinen oder Fahrzeuggetriebe, mit einem schalenförmigen Abschnitt (1) und einem daran einstückig angeformten Befestigungsabschnitt (2),
**dadurch gekennzeichnet, dass**
der schalenförmige Abschnitt (1) durch Thermoplast-Schaum-Gießen hergestellt ist und im Querschnitt betrachtet einen mittleren, zelligen Wandabschnitt (4) aufweist, der zur Innenseite in einen im Wesentlichen zellfreien Innenwandabschnitt (5) und zur Außenseite in einen im Wesentlichen zellfreien Außenwandabschnitt (6) übergeht.

2. Schallisolierendes Gehäuseteil nach Anspruch 1,
**dadurch gekennzeichnet, dass**
der Befestigungsabschnitt (2) im Querschnitt betrachtet im Wesentlichen zellfrei ausgebildet ist.

3. Schallisolierendes Gehäuseteil nach Anspruch 1 oder 2,
**dadurch gekennzeichnet, dass**
der schalenförmige Abschnitt (1) und der Befestigungsabschnitt (2) aus glasfaserverstärktem Polyamid gebildet sind.

4. Schallisolierendes Gehäuseteil nach einem der Ansprüche 1 bis 3,
**dadurch gekennzeichnet, dass**
der Kunststoff einen seine Wärmeleitfähigkeit erhöhenden Füllstoff enthält.

5. Schallisolierendes Gehäuseteil nach einem der Ansprüche 1 bis 4,
**dadurch gekennzeichnet, dass**
an der Außenseite des schalenförmigen Abschnitts (1) eine vorzugsweise aus thermoplastischem Elastomer gebildete Elastomerschicht (11) angeordnet ist.

6. Schallisolierendes Gehäuseteil nach Anspruch 5,
**dadurch gekennzeichnet, dass**
die Elastomerschicht (11) einen ihre Wärmeleitfähigkeit erhöhenden Füllstoff enthält.

7. Schallisolierendes Gehäuseteil nach Anspruch 5 oder 6,
**dadurch gekennzeichnet, dass**
die Elastomerschicht (11) aus Polyamid enthaltendem thermoplastischem Elastomer gebildet ist.

8. Schallisolierendes Gehäuseteil nach einem der Ansprüche 5 bis 7,
**dadurch gekennzeichnet, dass**
der schalenförmige Abschnitt (1) und die Elastomerschicht (11) stoffschlüssig miteinander verbunden sind.

9. Schallisolierendes Gehäuseteil nach einem der Ansprüche 5 bis 8,
**dadurch gekennzeichnet, dass**
an dem schalenförmigen Abschnitt (1) Hinterschnitte (15, 16) und/oder nietartige Verbindungselemente (17) ausgebildete sind, an denen die Elastomerschicht (11) formschlüssig mit dem schalenförmigen Abschnitt (1) verbunden ist.

10. Schallisolierendes Gehäuseteil nach Anspruch 4 oder 6,
**dadurch gekennzeichnet, dass**
der Füllstoff aus Magnetitteilchen gebildet ist.
